# EUROPÄISCHE PATENTSCHRIFT

(11) **EP 1 023 955 B1**
(45) Veröffentlichungstag und Bekanntmachung des Hinweises auf die Patenterteilung: **02.11.2005**
(21) Anmeldenummer: 99890021.1
(22) Anmeldetag: 27.01.1999
(51) Int. Cl.: B21D 47/00, B32B 31/20, B21D 39/03

(54) **Verfahren und Vorrichtung zum Herstellen einer Verbundplatte**
Method and apparatus for manufacturing a composite panel
Procédé et dispositif de fabrication d'un panneau composite

(43) Veröffentlichungstag der Anmeldung: 02.08.2000
(73) Patentinhaber: Van der Meulen, Alfred, A-5310 Mondsee (AT)
(72) Erfinder: Van der Meulen, Alfred, A-5310 Mondsee (AT)
(74) Vertreter: Hübscher, Helmut

(56) Entgegenhaltungen:
- EP-A- 0 069 401
- EP-A- 0 078 174
- EP-A- 0 385 769
- GB-A- 1 221 134

## Beschreibung

Die Erfindung bezieht sich auf ein Verfahren zum Herstellen einer Verbundplatte aus wenigstens zwei Lagen, die miteinander über eine unter Wärmezufuhr aushärtende Klebeschicht verbunden werden, sowie auf eine Vorrichtung zur Durchführung des Verfahrens, gemäß dem Oberbegriff des Anspruchs 4.

Aus der EP-A-0 385 769 ist ein Verfahren und eine Vorrichtung zum Kontinuierlichen Herstellen einer Verbundplatte bekannt, wobei die zu einer Rolle aufgewickelten Lagen in ihrer gesamten Länge erwärmt werden müssen.

Um bei vielfältig einsetzbaren Blechplatten eine wirksame Dämpfung des Körperschalls zu erreichen, ist es bekannt, diese Platten als Verbundplatten aus zwei miteinander über eine Kunststoffzwischenschicht verbundenen Blechlagen herzustellen. Zu diesem Zweck werden die beiden je von einem Vorratshaspel abgezogenen Blechlagen nach einer entsprechenden Vorbehandlung in einem gasbeheizten Durchlaufofen erwärmt, bevor diese erwärmten Blechlagen nach dem Auftragen einer Kunststoffschicht zumindest auf einer Blechlage mit Hilfe von Druckrollen gegeneinander gepreßt und miteinander über die Kunststoffschicht verklebt werden. Nachteilig bei diesem bekannten Herstellungsverfahren ist allerdings, daß die Blechlagen vor ihrem Zusammenfügen erwärmt werden, was nicht nur die gegenseitige Ausrichtung der Blechlagen erschwert, sondern auch die Gefahr von unvorhersehbaren Verwerfungen der Verbundplatte mit sich bringt. Außerdem ist das Erwärmen der Blechlagen in Durchlauföfen aufwendig, wozu noch kommt, daß der wirtschaftliche Einsatz von Durchlauföfen einen kontinuierlichen Betrieb voraussetzt.

Diese Nachteile treten auch bei der Herstellung anderer Verbundplatten auf, deren einzelne Lagen miteinander unter Wärmezufuhr verklebt werden (EP 0 069 401 A2). Solche Verbundplatten weisen beispielsweise eine wabenartige oder wellenförmig profilierte Mittellage mit beidseits aufgeklebten Decklagen auf, wobei die einzelnen Lagen wiederum vor ihrem Zusammenfügen in Durchlauföfen erwärmt und mit einer Klebeschicht beschichtet werden müssen.

Darüber hinaus ist es bekannt (EP 0 479 369 A1), lediglich die an ein Deckblech angrenzende, thermoplastische Kernlage einer Verbundplatte über ein induktives Erwärmen des Deckbleches zu erwärmen, um die Verbundplatte leichter biegen zu können, was jedoch keine Lehre zum lagerichtigen, verzugsfreien Verkleben zweier Lagen einer Verbundplatte über eine Klebeschicht geben kann.

Um zur Herstellung von Kronenkappen und anderen Verschlüssen von Flaschen und Behältern ein Blech zunächst mit einer Korrosionsschutzschicht und dann mit einer dichtenden Auflage aus einer Polyolefinschicht versehen zu können, ist es schließlich bekannt (DE 26 17 526 B2), die aus einem Grundharz, vorzugsweise einem thermisch härtenden Harz, und einem oxidierten Polyäthylen unter Einsatz verschiedener Lösungsmittel erhaltene Mischung auf das Blech aufzubringen und zur Aushärtung zu erwärmen, wobei sich das oxidierte Polyäthylen an der Oberfläche der sich bildenden Korrosionsschutzschicht anreichert, um eine spätere Heißverbindung der Korrosionsschutzschicht mit der Polyolefinschicht bei einer Temperatur zu ermöglichen, die größer als der Schmelzpunkt des oxidierten Polyäthylens bzw. des Polyolefins ist. Das Polyolefin wird auf die Korrosionsschutzschicht in Form eines Pulvers oder einer Bahn aufgebracht und zum Erreichen einer Schmelzverbindung entsprechend erhitzt, wobei die Erwärmung in einem Ofen vorgenommen oder durch ein vorausgehendes Erhitzen des Bleches erfolgen kann. Außerdem kann zur Schmelzverbindung das Polyolefin einer Hochfrequenzerhitzung unterworfen werden. Dieses bekannte Verfahren berücksichtigt die besonderen Umstände, die beim Herstellen von Kronenkappen und anderen dichtenden Verschlüssen, nicht aber beim Herstellen von Verbundplatten aus zwei miteinander über eine Klebeschicht verbundenen Lagen zu berücksichtigen sind, so daß ein solcher Stand der Technik keine Lehre für die Herstellung von wenigstens zweilagigen Verbundplatten geben kann, zumal das Aufbringen einer Korrosionsschutzschicht auf ein Blech mit einer Wärmebehandlung verbunden ist, was die Gefahr von Verwerfungen mit sich bringt. Daran ändert sich auch nichts, wenn die Polyolefinschicht zwischen zwei solchen mit einer Korrosionsschutzschicht versehenen Blechen angeordnet wird.

Der Erfindung liegt somit die Aufgabe zugrunde, diese Mängel zu vermeiden und ein Verfahren und eine Vorrichtung zur Herstellung einer Verbundplatte der eingangs geschilderten Art so zu verbessern, daß mit einem vergleichsweise geringen Aufwand die einzelnen Lagen genau positioniert und weitgehend verzugsfrei miteinander unter entsprechender Wärmezufuhr verklebt werden können.

Die Erfindung löst die gestellte Aufgabe durch ein Verfahren und eine Vorrichtung mit den Merkmalen der Ansprüche 1 und 4.

Da Klebeschichten selbst keine elektrischen Leiter darstellen, können solche Klebeschichten nur mittelbar elektrisch erwärmt werden. Durch eine Wirbelstrominduktion können dabei besonders günstige Erwärmungsbedingungen geschaffen werden, weil die zumindest in einer Lage induzierten Wirbelströme diese Lage erwärmen, von der dann die Wärme auf die Klebeschicht übertragen wird. Die mittelbare induktive Erwärmung der Klebeschicht kann jedoch auch über elektrisch leitende Einlagerungen in der Klebeschicht erfolgen, wie dies an sich beim Einkleben von Kunststoffrohrstutzen in Filtergewebe bekannt ist (US 4 265 859 A), die an die beiden stirnseitigen Flansche des Rohrstutzens über eine Klebeschicht angeklebt werden. Die elektrisch leitenden Einlagerungen können eine körnige Struktur aufweisen, aus Fasern bestehen oder durch eine Folie oder ein Gewebe gebildet werden.

Unabhängig davon, ob die Klebeschicht über eine Lage und/oder über elektrisch leitende Einlagerungen erwärmt wird, bringt diese mittelbare induktive Erwärmung der Klebeschicht den Vorteil mit sich, daß die einzelnen Lagen vor ihrer Erwämung in kaltem Zustand unter Zwischenlage der Klebeschicht zusammengefügt werden können, was nicht nur eine einfache gegenseitige Ausrichtung der Lagen ermöglicht, sondern auch die Verzugsgefahr erheblich herabsetzt, weil die Wärmebehandlung erst nach einer gegenseitigen Positionierung der Lagen unter einem entsprechenden gegenseitigen Anpreßduck durchgeführt werden kann. In diesem Zusammenhang ist außerdem zu beachten, daß die induktive Erwärmung durch geeignete Maßnahmen ohne weiteres so gesteuert werden kann, daß eine über die jeweilige Verbindungsfläche gleichmäßige Wärmebehandlung erfolgt, und zwar auf eine vergleichsweise kurze Zeitspanne beschränkt. Dadurch kann der Energiebedarf gegenüber einem gasbeheizten Durchlaufofen wesentlich verringert werden. Darüber hinaus besteht im Gegensatz zu den bekannten Durchlauföfen stets die Möglichkeit, die Herstellung von Verbundplatten ohne Energieverluste zu unterbrechen und nach einer Unterbrechung ohne besondere Vorlaufzeiten wieder aufzunehmen.

Die Klebeschicht kann je nach Bedarf in unterschiedlicher Weise auf wenigstens eine der Lagen, z. B. durch einen Streuvorgang, aufgebracht werden. Verfahrenstechnisch ergeben sich allerdings besonders einfache Bedingungen, wenn die Klebeschicht in Form einer Folie zwischen die beiden Lagen eingebracht wird, weil in diesem Fall die Klebeschicht und die miteinander zu verbindenden Lagen von Vorratshaspeln abgezogen werden können.

Die Ausführungsmöglichkeiten der einzelnen Lagen ist vielfältig und vom jeweiligen Einsatz abhängig. Neben der Verklebung gleichartiger Lagen zur Dämpfung des Körperschalles können unterschiedliche Kernlagen mit entsprechenden Decklagen über eine mittelbare elektrische Erwärmung der zwischen den einzelnen Lagen eingebrachten Klebeschichten verbunden werden. Als Kemlagen kommen Mineralwollematten ebenso in Frage wie profilierte Lagen aus Metall oder Kunststoff. Die Profilierung kann dabei vor dem Zusammenführen der einzelnen Lagen unter Zwischenlage der Klebeschicht vorgenommen werden, wobei sich insbesondere dann ein vorteilhafter Verfahrensablauf ergibt, wenn in einer Lage gegen die andere Lage vorragende, rasterartig über die Oberfläche der Lage verteilte Noppen durch einen Preßvorgang ausgeformt werden. Das Pressen der Noppen unmittelbar vor dem Zusammenführen der einzelnen Lagen vereinfacht die Lagerhaltung weil keine profilierten Lagen auf Vorrat gefertigt werden müssen. Die Noppen erlauben außerdem eine vorteilhafte Verklebung über eine induktive Erwärmung und stellen eine gute Verbundwirkung bei niedrigem Gewicht sicher.

Bei der Vorrichtung gemäß der Erfindung, zufolge der Umlenkung der unter einer entsprechenden Zugbelastung über die Umlenkwalze gezogenen Lagen, werden diese gegeneinander und gegen die Umlenkwalze gedrückt und in ihrer gegenseitigen Ausrichtung während der Erwärmung und Aushärtung der Klebeschicht bzw. der Klebeschichten festgehalten.

Soll eine der Lagen in Form von rasterartig über die Oberfläche verteilten Noppen profiliert werden, so kann den Druckwalzen im Bereich des Förderweges dieser Lage eine Formstanzpresse zum Einpressen der Noppen vorgeordnet werden. Die durch diese Formstanzpresse erzwungene schrittweise Förderung der mit den Noppen versehenen Lage ist bei der Führung der anderen Lagen zu berücksichtigen, wenn diese schrittweise Förderung nicht durch einen Zwischenspeicher ausgeglichen werden soll. Da im allgemeinen die in Bandform zugeförderten Lagen nach ihrer Verklebung eine Beschneidung erfordern, kann eine schrittweise Förderung vorteilhaft für die Schnitte quer zur Förderrichtung ausgenützt werden. Mit einer während des Stanzvorganges mit der Lage mitbewegten Formstanzpresse kann aber auch ein kontinuierlicher Durchlauf trotz des Einsatzes einer Formstanzpresse erreicht werden.

An Hand der Zeichnung wird das erfindungsgemäße Verfahren zum Herstellen einer Verbundplatte näher erklärt. Es zeigen
- Fig. 1: eine erfindungsgemäße Vorrichtung zum Herstellen einer Verbundplatte in einem schematischen Blockschaltbild,
- Fig. 2: das Zusammenführen der einzelnen Lagen zu einer Verbundplatte in einem schematischen Längsschnitt und
- Fig. 3: einen erfindungsgemäßen Induktionsofen zum Erwärmen der die einzelnen Lagen miteinander verbindenden Klebeschichten in einer vereinfachten, zum Teil aufgerissenen Seitenansicht.

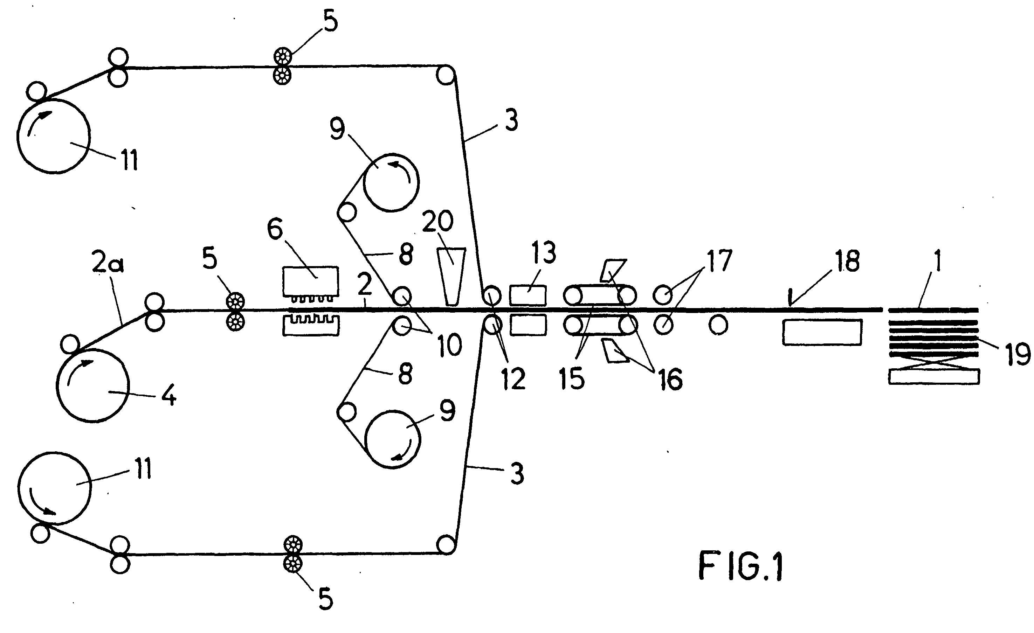

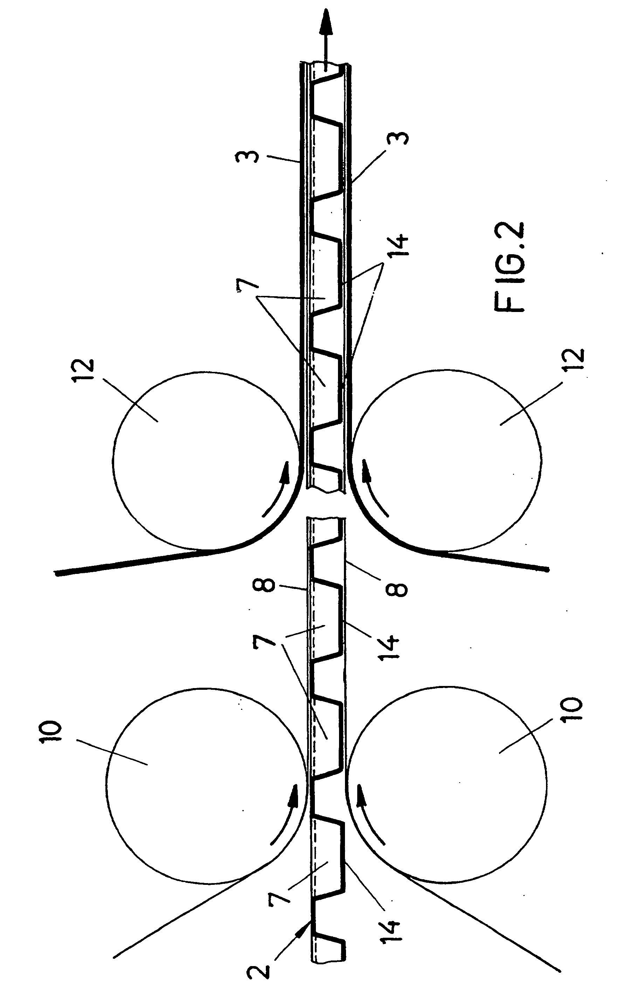

Gemäß dem in der Fig. 1 dargestellten Ausführungsbeispiel werden Verbundplatten 1 aus einer profilierten Lage 2 als Kern und zwei Decklagen 3 hergestellt, die mit der Kernlage 2 verklebt werden. Zu diesem Zweck wird zunächst das Ausgangsband 2a für die Kernlage 2, beispielsweise ein Aluminiumblech, von einem Vorratshaspel 4 abgezogen und nach einer Reinigung mit Hilfe einer Bürsteinrichtung 5 einer Formstanzpresse 6 schrittweise zugefördert, in der das Ausgangsband 2a zur Kernlage 2 profiliert wird, indem aus dem Ausgangsband 2a rasterartig über die Oberfläche verteilte Noppen 7 durch ein Formstanzen ausgeformt werden, wie dies in der Fig. 2 angedeutet ist. Auf diese Kernlage 2 werden nunmehr beidseits unter Wärmezufuhr aushärtbare Klebeschichten 8, z. B. aus einem schmelzklebenden Polymer, in Folienform aufgebracht, wobei diese Folien von Vorratsrollen 9 abgezogen und über Druckwalzen 10 an die Kernlage 2 angedrückt werden. Die so vorbereitete Kernlage 2 kann nunmehr mit den Decklagen 3 zusammengeführt werden, die wie die Kernlage 2 aus einem Aluminiumblech bestehen können. Die von Vorratshaspeln 11 abgenommenen Decklagen 3 werden nach einer Reinigung in Bürsteinrichtungen 5 Druckwalzen 12 zugefördert, mit deren Hilfe die einzelnen Lagen 2 und 3 unter Zwischenlage der Klebeschichten 8 gegeneinandergedrückt werden, um anschließend einen Induktionsofen 13 zu durchlaufen, in dem die für die Verklebung der Lagen 2 und 3 erforderlichen Wärmebehandlung vorgenommen wird. In diesem Induktionsofen 13 werden zumindest in den Decklagen 3 Wirbelströme induziert, die die Decklagen 3 entsprechend erwärmen, wobei die Stromwärme durch Wärmeleitung auf die Klebeschichten 8 übertragen wird. Die Decklagen 3 werden somit einerseits an den vorragenden Stirnflächen 14 der vorzugsweise kegelstumpfförmigen Noppen 7 und anderseits an der diesen Noppen 7 gegenüberliegenden Grundfläche des Ausgangsbandes 2a festgeklebt. In einer nachfolgenden Doppelbandpresse 15, die mit einer Kühleinrichtung 16 gekoppelt ist, werden die zusammengeklebten Lagen 2, 3 bis zum verschiebefesten Abbinden der Klebeschichten 8 unter einem eine gegenseitige Verlagerung der einzelnen Lagen 2, 3 verhindernden Druck geführt. Die verklebten Lagen 2, 3 werden dann durch eine Längsschere 17 besäumt und durch eine Schere 18 in einzelne Verbundplatten 1 abgelängt, die dann auf einem Stapel 19 abgelegt werden.

Anstelle der in Folienform zugeführten Klebeschicht 8, könnte diese auch auf die Kernlage 2 aufgestreut werden, allerdings nur auf der jeweiligen Oberseite. Diese Möglichkeit ist in der Fig. 1 durch eine Aufstreueinrichtung 20 angedeutet.

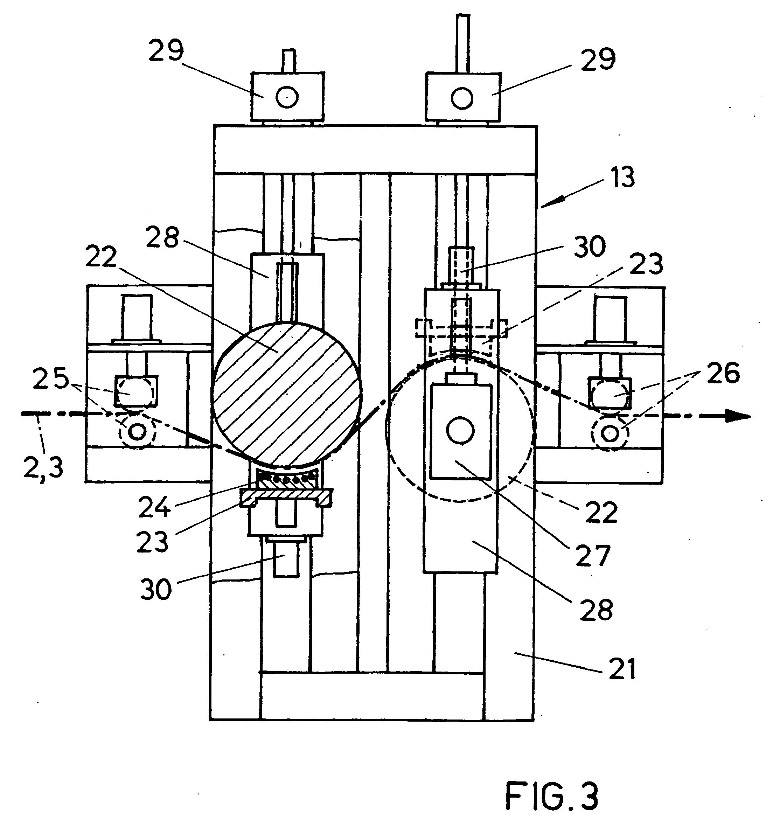

In der Fig. 3 ist eine vorteilhafte Ausführungsform eines Induktionsofens 13 vereinfacht dargestellt. Dieser Induktionsofen 13 weist zwei in einem Gestell 21 der Höhe nach verstellbare Umlenkwalzen 22 für die über die Druckwalzen 12 zusammengeführten Lagen 2, 3 auf, um durch die Umlenkung dieser Lagen 2, 3 im Bereich je eines Induktors 23 zunächst nach der einen und dann nach der anderen Seite während der Wärmebehandlung eine entsprechende Andrückkraft der jeweils dem Induktor 23 zugekehrten Decklage 3 an die Kernlage 2 zu erreichen. Über die an eine entsprechende Wechselspannung angeschlossenen Induktionsspulen 24 der Induktoren 23 werden daher in den ihnen zugekehrten, gegenüber der Kernlage 2 abhebesicher geführten Decklagen 3 Wirbelströme induziert, die die Decklagen 3 vorzugsweise im Bereich der Klebeschicht 8 und über die Decklagen 3 die Klebeschichten 8 auf die Schmelztemperatur erwärmen. Der Anpreßdruck kann dabei bei vorgegebener Zugbelastung der zusammengeführten Lagen 2,3 zwischen den angetriebenen Ein- und Auslaßwalzen 25 und 26 durch eine Änderung des Umschlingungswinkels der Umlenkwalzen 22 eingestellt werden, die zu diesem Zweck gegensinnig im Gestell 21 der Höhe nach verlagert werden. Die Lagerblöcke 27 dieser Umlenkwalzen 22 sind in im Gestell 21 geführten Schlitten 28 gehalten, die mit Hilfe von Spindeltrieben 29 verstellt werden. In diesen Schlitten 28 sind auch die Induktoren 23 gelagert, und zwar gegenüber den Umlenkwalzen 22 radial verstellbar. Zur Verstellung der Induktoren 23 sind Stellzylinder 30 vorgesehen.

Es braucht wohl nicht besonders hervorgehoben zu werden, daß in Abhängigkeit vom jeweiligen Anwendungsfall anstelle einer zeine Klebeschicht, die nach dem Abbinden bei einer nachträglichen Erwärmung das Lösen der einzelnen Lagen voneinander erlaubt, auch vernetzende Kleberschieten, z. B. Komponentenkleber, eingesetzt werden können, die allerdings nicht in Folienform aufgebrtacht werden können. Diese vernetzenden Klebeschichten bedürfen zur Aushärtung beheizter Pressen.

Zumindest die Kernlage 2 kann auch in vorgefertigten Platten angefördert werden, ohne die kontinuierliche Fertigung von Verbundplatten zu gefährden. Es muß ja lediglich dafür gesorgt werden, daß die Platten der Decklage 3 vor dem Zuführen der Klebeschicht 8 fugenlos aneinandergereiht werden. Die Decklagen 3 sind nach dem Abwickeln von den Vorratshaspeln unter Umständen zu richten. Zu diesem Zweck können entsprechende Richtmaschinen vorgesehen werden, was aus Übersichtlichkeitsgründen nicht näher dargestellt ist.

## Patentansprüche

1. Verfahren zum kontinuierlichen Herstellen einer Verbundplatte (1) aus wenigstens zwei Lagen (2, 3), die miteinander über eine unter Wärmezufuhr aushärtende Klebeschicht (8) verbunden werden, wobei zunächst die kalten Lagen und die zwischen den kalten Lagen eingebrachte Klebeschicht fortlaufend gegeneinandergedrückt werden, bevor die Klebeschicht fortlaufend durch ein induktives Erwärmen zumindest einer der beiden Lagen und/oder elektrisch leitender Einlagerungen in der Klebeschicht erwärmt wird.

2. Verfahren nach Anspruch 1, **dadurch gekennzeichnet, daß** die Klebeschicht in Form einer Folie zwischen die beiden Lagen eingebracht wird.

3. Verfahren nach Anspruch 1 oder 2, **dadurch gekennzeichnet, daß** vor dem Zusammenführen der beiden Lagen in einer Lage gegen die andere Lage vorragende, rasterartig über die Oberfläche der Lage verteilte Noppen durch einen Preßvorgang ausgeformt werden.

4. Vorrichtung zur Durchführung des Verfahrens nach einem der Ansprüche 1 bis 3, bestehend aus die Lagen unter Zwischenlage der Klebeschicht zwischen sich zusammenführenden Druckwalzen und aus einer Wärmebehandlungseinrichtung für die zusammengefügten Lagen, **dadurch gekennzeichnet, daß** die Druckwalzen (12) zum Zusammenführen der Lagen (2, 3) der als Induktionsofen (13) ausgebildeten Warmebhandlungseinrichtung vorgelagert sind, der zumindest eine Umlenkwalze (22) für die zusammengeführten Lagen (2, 3) im Bereich einer Induktionsspule (24) aufweist.

5. Vorrichtung nach Anspruch 4, **dadurch gekennzeichnet, daß** den Druckwalzen (12) im Bereich des Förderweges einer Lage (2) eine Formstanzpresse (6) zum Einpressen von Noppen (7) in diese Lage (2) vorgeordnet ist.

## Claims

1. Method for the continuous production of a composite sheet (1) comprising at least two layers (2, 3) which are interconnected by means of an adhesive layer (8) which hardens when subjected to a heat supply wherein initially the cold layers and the adhesive layer introduced between the cold layers are continuously pressed against each other before the adhesive layer is continuously heated through inductive heating of at least one of the two layers and / or electrically conductive inclusions in the adhesive layer.

2. Method according to claim 1, **characterised in that** the adhesive layer is introduced between the two layers in the form of a film.

3. Method according to claim 1 or 2, **characterised in that** before the two layers are brought together with one layer against the other upwardly orientated projections are formed through a pressing process, distributed over the surface of the layer like a lattice.

4. Device for implementing the method according to one of the claims 1 to 3, comprising rollers bringing together the layers with the intermediate arrangement of the adhesive layer between them and a heat treatment device for the layers joined together, **characterised in that** the rollers (12) for bringing together the layers (2, 3) are arranged before the heat treatment device constructed as an induction oven (13) which has at least one bending roller (22) for the layers (2, 3) brought together in the region of an induction coil (24).

5. Device according to claim 4, **characterised in that** a punch press (6) for pressing projections (7) into a layer (2) is arranged before the rollers (12) in the region of conveyance path of said layer (2).

## Revendications

1. Procédé de fabrication en continu d'un panneau composite (1) formé d'au moins deux nappes (2,3), reliées ensemble par l'intermédiaire d'une couche d'adhésif (8) durcissant avec l'apport de chaleur, sachant que, d'abord, les nappes froides et la couche d'adhésif, introduite entre les nappes froides, sont pressées les unes contre les autres de façon continue, avant que la couche d'adhésif soit chauffée de façon continue par chauffage inductif au moins d'une des deux nappes et/ou d'inserts, conducteurs d'électricité, placés dans la couche d'adhésif.

2. Procédé selon la revendication 1, **caractérisé en ce que** la couche d'adhésif est insérée sous forme d'une feuille entre les deux nappes.

3. Procédé selon la revendication 1 ou 2, **caractérisé en ce que**, avant l'assemblage des deux nappes, des tétons réalisés dans une nappe, répartis sur la surface de la nappe, en suivant une trame, faisant saillie contre l'autre nappe, sont formés au moyen d'un processus de pressage.

4. Dispositif de mise en oeuvre du procédé selon l'une des revendications 1 à 3, composé de rouleaux de pressage faisant passer entre eux, de façon assemblée, les nappes avec interposition de la couche d'adhésif, et d'un dispositif de traitement thermique pour les nappes assemblées, **caractérisé en ce que** les rouleaux de pressage (12), prévus pour effectuer le guidage conjoint des nappes (2, 3), sont montés en amont du dispositif de traitement thermique, réalisé sous la forme de four à induction (13), qui présente un rouleau de renvoi (22) pour les nappes (2, 3) guidées conjointement, dans la zone d'une bobine d'induction (24).

5. Dispositif selon la revendication 4, **caractérisé en ce que**, dans la zone du chemin de transport d'une nappe (2), en amont des rouleaux de pressage (12), est disposée une presse de formage par estampage (6), pour effectuer le pressage des tétons (7) dans cette nappe (2).
